# EUROPÄISCHE PATENTSCHRIFT

(11) **EP 0 411 352 B1**
(45) Veröffentlichungstag und Bekanntmachung des Hinweises auf die Patenterteilung: **29.12.1993**
(21) Anmeldenummer: 90113213.4
(22) Anmeldetag: 11.07.1990
(51) Int. Cl.: B62D 61/12, B60G 17/033

(54) **Anfahrhilfe für luftgefederte Mehrachs-Fahrzeuge mit liftbarer Zusatzachse**
Starting aid for air suspended multiple axled vehicles with liftable additional axle
Aide au démarrage pour véhicules avec des axes multiples à suspension pneumatique avec un axe levable additionnel

(30) Priorität: 29.07.1989 DE 3925196
(43) Veröffentlichungstag der Anmeldung: 06.02.1991
(73) Patentinhaber: Iveco Magirus Aktiengesellschaft, D-89017 Ulm (DE)
(72) Erfinder: Stürner, Johann, Dipl.-Ing.(FH), D-7900 Ulm (DE); Seiffert, Eberhard, Ing.grad., D-7902 Blaubeuren (DE)
(74) Vertreter: TER MEER STEINMEISTER & PARTNER GbR

(56) Entgegenhaltungen:
- EP-A- 0 301 225
- DE-A- 2 740 264
- GB-A- 1 151 396
- US-A- 2 777 529

## Beschreibung

Die Erfindung betrifft eine Anfahrhilfe für luftgefederte Mehrachsfahrzeuge mit zumindest einer Antriebsachse und zumindest einer liftbaren Zusatzachse, deren linke Luftfederbälge und rechte Luftfederbälge jeweils durch eine pneumatische Leitung miteinander verbunden sind.

Beim Einsatz von Kraftfahrzeugen ergeben sich des öfteren Fahrzustände, bei welchen die Fahrzeuge Anfahrschwierigkeiten haben, insbesondere bei schnee- oder eisbedeckten Fahrbahnen. Bei Fahrzeugen mit drei oder mehr Achsen ist es möglich und gesetzlich erlaubt, die maximale Achslast zu überschreiten (lt. Straßenverkehrszulassungsordnung ist in der Bundesrepublik Deutschland eine Überlastung der Antriebsachse um maximal 30%, 90 Sekunden lang mit einer Wiederholsperre von 50 Sekunden erlaubt). Somit wird die Bodenhaftung der Triebachse erhöht und ein "Durchdrehen" der Antriebsräder erschwert. Bei bekannten Anfahrhilfen für luftgefederte Kraftfahrzeuge, beispielsweise gemäß DE-A-35 45 222, DE-A-36 09 843 oder die gattungsgemäße DE-A-34 16 422, wird die Zusatzachse bei einem Anfahrvorgang teilentlastet, indem der Betriebsdruck der Luftfederbälge der Zusatzachse bis auf einen Restdruck von ca. 0,5 bar abgesenkt wird. Die dabei freiwerdende Achslast wird somit zusätzlich auf die Antriebsachse übertragen, d.h. die Achslast der Antriebsachse wird erhöht. Die bekannten Anfahrhilfen sind nur bei annähernd vollbeladenem Fahrzeug optimal wirksam, weil nur dann die maximal zugelassene Achslast (130% der normalen Last) erreicht wird. Bei teilbeladenen Fahrzeugen, wo überwiegend die Anfahrschwierigkeiten auftreten, sind die bekannten Anfahrhilfen nicht optimal wirksam.

Aufgabe der Erfindung ist die Schaffung einer Anfahrhilfe für luftgefederte Mehrachsfahrzeuge der eingangs genannten Art, die bei einfachem Aufbau auch im Teillastbereich eines Fahrzeugfahrbetriebes die maximal verfügbare Traktion mit Hilfe einfacher Mittel ermöglicht.

Gelöst wird die erfindungsgemäße Aufgabe dadurch, daß in den beiden pneumatischen Leitungen jeweils ein normalerweise geöffnetes elektromagnetisch betätigbares 3/2-Wege-Ventil angeordnet ist, deren Entlüftungsausgänge mit einem normalerweise geschlossenen elektromagnetisch betätigbaren Entlüftungsventil verbunden sind, wobei im Teillastbetrieb des Fahrzeugs bei einem Anfahrvorgang die vorgenannten Ventile durch elektrische Schaltmittel bei gleichzeitigem Liften der Zusatzachse betätigbar und in die Entlüftungsstellung schaltbar sind.

Zweckmäßigerweise ist das (Ein/Aus-)Entlüftungsventil als elektromagnetisch betätigbares 3/2-Wege-Ventil nach Art der vorgenannten beiden 3/2-Wege-Ventile in den pneumatischen Leitungen ausgebildet, dessen Eingang verschlossen ist. Es ist von Vorteil für das Entlüftungsventil ein gleich ausgebildetes an sich bekanntes Magnetventil zu verwenden.

Die elektrischen Schaltmittel umfassen einen elektrischen Schalter und ein handbetätigtes elektronischen Schaltgerät mit Zeitrelais durch die die vorgenannten Ventile elektromagnetisch betätigbar sind.Der elektronische Schalter ist vorzugsweise als handbetätigbarer Tastschalter ausgebildet,welcher bei einem Anfahrvorgang von Hand betätigt und die vorgenannten Ventile unter Strom hält und entlüftet. Nach Ablauf der vorgegebenen im Zeitrelais eingestellten Zeit, welche dem Ende des Anfahrvorgangs gleichzusetzen ist, schalten die Ventile wieder in die Ausgangsstellung.

Der elektronische Schalter kann in alternativer Ausgestaltung der Erfindung auch durch ein elektrisches Anfahrsignal selbsttätig betätigbar sein, welches z.B. bei einem Einlegen des ersten Getriebegangs, bei einer (niederen) Anfahrgeschwindigkeit oder bei einer geringen Anfahrrollbewegung der Räder ausgelöst werden kann.

Für einen optimalen Vollastbetrieb des Fahrzeugs ist vorteilhafterweise ein durch den maximalen Federbalgdruck der Antriebsachse angesteuerter Überlastschalter vorgesehen, durch den bei Vollastbetrieb des Fahrzeugs die vorgenannten Ventile bei gleichzeitiger Unterbrechung eines Liftvorgangs der Zusatzachse in ihre Ausgangsstellung rückschaltbar sind, bei welcher die Entlüftung der Luftfederbälge der Zusatzachse unterbrochen ist. Somit wird ein weiterer Anstieg der Achslast auf der Antriebsachse vermieden. Die Zusatzachse übernimmt wieder Tragefunktion.

Der Überlastschalter ist ebenfalls mit dem elektronischen Schaltgerät mit Zeitrelais zwecks Rückschaltung der vorgenannten Ventile gekoppelt.

Es kann mithin bei einem Vollastbetrieb des Fahrzeugs entsprechend der Schaltzeit der Elektronik der vorgenannte Zustand der Achslast "eingefroren" und somit die gesetzlich zugelassene maximale Überlastung der Antriebsachse voll ausgenutzt werden. Außerdem verhindert die Überlastschutzvorrichtung, daß die Antriebsachse über die gesetzlich maximale zugelassene Achslast belastet wird.

Die Erfindung ermöglicht mithin die optimale Nutzung der Anfahrhilfe in allen Beladungszuständen nicht nur bei beladenem Fahrzeug, sondern vor allem bei teilbeladenem oder leerem Fahrzeug, wo die eingangs geschilderten Anfahrschwierigkeiten hauptsächlich auftreten. Es werden die Luftfederbälge der Zusatzachse vollständig entlüftet und gleichzeitig die Zusatzachse über die Liftvorrichtung angehoben und dadurch die Antriebsachslast erhöht. Die bekannten Anfahrhilfen besitzen in den Luftfederbälgen der Zusatzachse bei einem Teillastbetrieb einen Restdruck von ca. 0,5 bar. Diese Restachslast der Zusatzachse zusammen mit dem Eigengewicht der Zusatzachse fehlt der Antriebsachse bei einem Anfahrvorgang und verschlechtert nach dem Stand der Technik die Traktionseigenschaften.

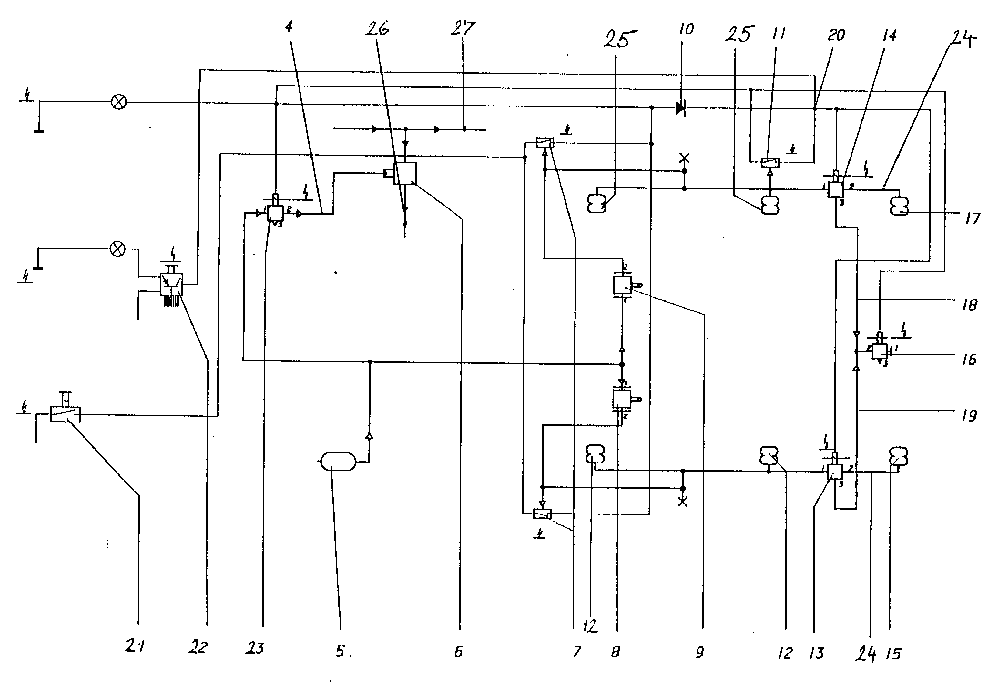

Die Erfindung wird nachfolgend anhand eines Ausführungsbeispiels unter Bezugnahme auf die schematische Zeichnung näher erläutert, deren einzige Figur das Schaltbild einer Anfahrhilfe für ein luftgefedertes Dreiachsfahrzeug mit liftbarer Zusatzachse zeigt.

Das Mehrachsfahrzeug besitzt eine nicht veranschaulichte Antriebsachse, der die linke Luftfederbälge (12) und die rechten Luftfederbälge (25) zugeordnet sind. Der Antriebsachse nachgeordnet ist eine (nicht veranschaulichte) liftbare Zusatzachse, der der linke Luftfederbalg (15) und der rechte Luftfederbalg (17) zugeordnet ist.

Die liftbare Zusatzachse kann durch eine (nicht veranschaulichte) Liftvorrichtung gegen die Kraft der Stoßdämpfer angehoben werden. Hierbei ist der hydraulische Rücklauf (26) durch ein hydropneumatisches Steuerventil (6) verschlossen, und es wird Hydraulikdruck in der Hydraulikleitung (27) von einer (nicht veranschaulichten) Hydraulikpumpe zum Druckzylinder der Liftvorrichtung der Zusatzachse geleitet.

Die beiden linken Luftfederbälge (12) und die beiden rechten Luftfederbälge (25) der Antriebsachse sind über jeweils eine pneumatische Leitung (24) mit den entsprechenden Luftfederbälgen (15 bzw. 17) der liftbaren Zusatzachse verbunden, wobei in den beiden pneumatischen Leitungen (24) jeweils ein elektromagnetisch betätigbares 3/2-Wege-Ventil (13 bzw. 14) angeordnet ist. Der Entlüftungsanschluß (3) dieser beiden Ventile (13, 14) ist über Druckluftleitungen (18, 19) mit dem Anschluß (2) (Ausgang) eines elektromagnetisch betätigbaren Entlüftungsventils (16) verbunden, welches ebenfalls als 3/2-Wege-Ventil ausgebildet ist, dessen Anschluß (1) (Vorrat) verschlossen ist.

Nachstehend wird die Funktion der Anfahrhilfe beschrieben.

Von einem Druckluftvorrat (5) werden über ein linkes bzw. ein rechtes Luftfederventil (8 bzw. 9) die linken Luftfederbälge (12) bzw. die rechten Luftfederbälge (25) entsprechend dem Beladungszustand belüftet. Beim Betätigen des elektrischen Rastschalters (21) der Liftvorrichtung wird dieser geschlossen und mithin auch über die beiden Schalter (7) die Stromkreise zu den elektromagnetisch betätigbaren 3/2-Wege-Ventilen (23, 13, 14 und 16).

In dieser stromkreisbelasteten Schaltstellung sind bei allen normalerweise geöffneten Magnetventilen (23, 13, 14 und 16) die Ausgangsanschlüsse (2) mit den Entlüftungsanschlüssen (3) verbunden. Auch die pneumatische Steuerleitung (4) zum hydropneumatischen Steuerventil (6) der Liftvorrichtung wird entlüftet und die Zusatzachse wie bereits erwähnt angehoben.

Gleichzeitig werden die beiden Luftfederbälge (15 und 17) der Zusatzachse über die Magnetventile (13, 14), die Druckluftleitungen (18 und 19) und über das Magnetventil (16) entlüftet.

Wird das Fahrzeug beladen und übersteigt die Achslast der Antriebsachse den (nach Straßenverkehrszulassungsordnung) zugelassenen Wert, muß die Zusatzachse selbsttätig abgesenkt werden und Achslast übernehmen. Dies geschieht durch Öffnen der beiden Druckschalter (7). Die Magnetventile (23,13, 14 und 16) werden stromlos, und es werden die Entlüftungsanschlüsse (3) der vorgenannten Magnetventile gesperrt. Gleichzeitig werden die Anschlüsse (1) (Vorrat) mit den Anschlüssen (2) (Ausgang) verbunden. Die pneumatische Steuerleitung (4) wird belüftet, und es wird die Liftvorrichtung auf "Senken" geschaltet. Über die beiden Magnetventile (13, 14) werden die Luftfederbälge (15, 17) der liftbaren Zusatzachse mit dem gleichen Druck der Luftfederbälge (12, 25) der Antriebsachse belüftet und übernehmen somit einen Teil der Gesamtlast.

Sollte bei einem Anfahren des Fahrzeugs ein "Durchdrehen" der Räder der Antriebsachse eintreten, wird über ein elektronisches Schaltgerät (22) die Anfahrhilfe manuell vom Fahrer durch Antasten geschaltet. Der Schalter (21) ist nur für normales Heben und Senken der Nachlaufachse vorgesehen. Die Anfahrhilfe wird über das Schaltgerät (22) durch Antasten ausgelöst.

Es ergeben sich zwei Fahrsituationen:

### a) Fahrzeug mit Teillast

Das elektronische Schaltgerät (22) schließt nach Antasten für die gesetzlich erlaubte Betätigunszeit die Stromkreise zu den Magnetventilen (13 und 14) und gleichzeitig über einen Überlastschalter (ii) die Stromkreise zu den Magnetventilen (23 und 16). Alle Magnetventile schalten auf Entlüften. Die Steuerleitung (4) wird entlüftet, das hydropneumatische Steuerventil (6) schaltet die Liftvorrichtung der Zusatzachse auf "Heben".

Die Luftfederbälge (15 und 17) der liftbaren Zusatzachse werden mittels der Magnetventile (13, 14) über die Druckluftleitungen (18, 19) und das Magnetventil (16) entlüftet. Dadurch wird die Achslast der Zusatzachse auf die Antriebsachse übertragen.

Der Vorteil der Anlage gegenüber bekannten Anlagen besteht darin, daß die Luftfederbälge der Zusatzachse vollständig entlüftet werden und die Zusatzachse im Teillastbereich angehoben wird, so daß das Eigengewicht der Achse als zusätzliche Achslast auf die Antriebsachse übertragen wird.

Sollte während dieses Vorgangs die maximal zugelassene Achslast bei der Anfahrhilfe nicht erreicht werden, so wird die Zusatzachse ganz angehoben und nach Ablauf der Schaltzeit des elektrischen Schaltgeräts (22) die Anlage wieder in die Ausgangslage gebracht.

### b) Fahrzeug mit Vollast

Sollte bedingt durch die vorhandene Last die maximal zugelassene Achslast bei der Anfahrhilfe auf der Antriebsachse erreicht werden, öffnet der Überlastschalter (11). Der Stromkreis auf die Magnetventile (23 und 16) wird unterbrochen. Eine Diode (10) verhindert, daß der Stromkreis vom Knotenpunkt (20) zum Magnetventil (23) bei einem Öffnen des Überlastschalters (11) geschlossen wird.

Das Magnetventil (23) belüftet die Steuerleitung (4) und das Steuerventil (6). Der Liftvorgang der Zusatzachse wird unterbrochen. Gleichzeitig schaltet das Magnetventil (16), welches den Anschluß (2 und 1) miteinander verbindet. Anschluß (1) des Magnetventils (16) ist verschlossen, wodurch die Entlüftung der Luftfederbälge (15, 17) der Zusatzachse unterbrochen und somit ein weiterer Anstieg der Achslast auf der Antriebsachse vermieden wird. Dieser Zustand wird entsprechend der Schaltzeit der Elektronik "eingefroren" und somit die gesetzlich zugelassene maximale Überlastung der Antriebsachse voll ausgenutzt.

## Patentansprüche

1. Anfahrhilfe für luftgefederte Mehrachsfahrzeuge mit zumindest einer Antriebsachse und zumindest einer liftbaren Zusatzachse, deren linke Luftfederbälge (12, 15) und rechte Luftfederbälge (25, 17) jeweils durch eine pneumatische Leitung (24) miteinander verbunden sind,
dadurch gekennzeichnet,
daß in den beiden pneumatischen Leitungen (24) jeweils ein normalerweise durchgeschaltetes elektromagnetisch betätigbares 3/2-Wege-Ventil (13 bzw. 14) angeordnet ist, deren Entlüftungsausgänge (3) mit einem normalerweise gesperrten elektromagnetisch betätigbaren Entlüftungsventil (16) verbunden sind, wobei in einem Teillastbetrieb des Fahrzeugs bei einem Anfahrvorgang die vorgenannten Ventile (13, 14, 16) durch elektrische Schaltmittel bei gleichzeitigem Liften der Zusatzachse betätigbar und in die Entlüftungsstellung schaltbar sind.

2. Anfahrhilfe nach Anspruch 1,
dadurch gekennzeichnet,
daß das Entlüftungsventil (16) als elektromagnetisch betätigbares 3/2-Wege-Ventil nach Art der erstgenannten beiden 3/2-Wege-Ventile (13, 14) ausgebildet ist, dessen Eingang (1) verschlossen ist.

3. Anfahrhilfe nach Anspruch 1 oder 2,
dadurch gekennzeichnet,
daß die elektrischen Schaltmittel einen elektrischen Schalter (21) und ein handbetätigtes elektronisches Schaltgerät (22) mit Zeitrelais umfassen, über die die vorgenannten Ventile (13, 14, 16) schaltbar sind.

4. Anfahrhilfe nach Anspruch 3,
dadurch gekennzeichnet,
daß der elektrische Schalter (21) ein handbetätigter Rastschalter ist.

5. Anfahrhilfe nach Anspruch 3,
dadurch gekennzeichnet,
daß das elektronische Schaltgerät (22) durch Antasten oder durch ein elektrisches Anfahrsignal selbsttätig betätigbar ist.

6. Anfahrhilfe nach einem der Ansprüche 1 bis 5,
dadurch gekennzeichnet,
daß ein durch den maximalen Federbalgdruck der Antriebsachse angesteuerter Überlastschalter (11) vorgesehen ist, durch den bei Vollastbetrieb des Fahrzeugs die vorgenannten Ventile (13, 14, 16) bei gleichzeitiger Unterbrechung eines Liftvorgangs der Zusatzachse in ihre Ausgangsstellung rückschaltbar sind, in der die Entlüftung der Luftfederbälge (15, 17) der Zusatzachse unterbrochen ist.

7. Anfahrhilfe nach Anspruch 6,
dadurch gekennzeichnet,
daß der Überlastschalter (11) über ein elektronisches Schaltgerät (22) mit Zeitrelais die vorgenannten Ventile (13, 14, 16) rückschaltet.

## Claims

1. A starting aid for air-sprung multiple axle vehicles with at least one driving axle and at least one liftable additional axle, the left air spring bellows (12, 15) and right air spring bellows (25, 17) of which are connected with each other in each case by a pneumatic line (24),
characterised in that
in each of the two pneumatic lines (24) a normally connected-through electromagnetically operable 3/2-way valve (13 or respectively 14) is arranged, the air discharge outlets (3) of which are connected with a normally blocked electromagnetically operable air exhaust valve (16), in which in a partial load operation of the vehicle, on a starting process, the above-mentioned valves (13, 14, 16) are operable by electric switching means with simultaneous lifting of the additional axle and are able to be switched into the air discharge setting.

2. A starting aid according to Claim 1,
characterised in that
the air exhaust valve (16) is constructed as an electromagnetically operable 3/2-way valve in the manner of the aforementioned two 3/2-way valves (13, 14), the input (1) of which is closed.

3. A starting aid according to Claim 1 or 2,
characterised in that
the electric switching means comprise an electric switch (21) and a manually operated electronic switching apparatus (22) with a time-lag relay, via which the above-mentioned valves (13, 14, 16) are able to be connected.

4. A starting aid according to Claim 3,
characterised in that
the electric switch (21) is a manually operated stop switch.

5. A starting aid according to Claim 3,
characterised in that
the electronic switching apparatus (22) is operable by touch or automatically by an electric starting signal.

6. A starting aid according to any one of Claims 1 to 5,
characterised in that
an overload switch (11) is provided, which is controlled by the maximum spring bellows pressure of the driving axle, through which switch, when the vehicle is in full load operation, the above-mentioned valves (13, 14, 16), with simultaneous interruption of a lifting process of the additional axle, are able to be switched back into their initial position, in which the removal of air from the air spring bellows (15, 17) of the additional axle is interrupted.

7. A starting aid according to Claim 6,
characterised in that
the overload switch (11) connects back the above-mentioned valves (13,14, 16) via an electronic switching apparatus (22) with a time-lag relay.

## Revendications

1. Aide au démarrage pour véhicules à plusieurs essieux à suspension pneumatique avec au moins un essieu moteur et au moins un essieu auxiliaire pouvant être soulevé, dont les coussins d'air pneumatiques gauches (12, 15) et les coussins d'air pneumatiques droits (25, 17) sont respectivement reliés par une conduite pneumatique (24) les uns avec les autres, aide au démarrage caractérisée en ce que dans les deux conduites pneumatiques (24), est disposée un distributeur à trois voies pouvant être actionné de façon électromagnétique et normalement en position de passage (13 ou 14), dont les sorties de mise à l'atmosphère (3) sont reliées à une soupape de mise à l'atmosphère pouvant être actionnée de façon électromagnétique et normalement en position fermée (16), étant donné que, dans un fonctionnement à charge partielle du véhicule, lors d'un processus de démarrage, les distributeurs que l'on vient de mentionner (13, 14, 16) peuvent être enclenchés par des moyens électroniques de commande dans la position de mise à l'atmosphère et peuvent être actionnés lors du soulèvement simultané de l'essieu auxiliaire.

2. Aide au démarrage selon la revendication 1, caractérisée en ce que la soupape de mise à l'atmosphère (16) est constituée sous la forme d'une soupape de distribution à trois voies pouvant être actionnée de façon électromagnétique selon le type des deux premièrs distributeurs à trois voies mentionnés (13, 14), dont l'entrée (1) est fermée.

3. Aide au démarrage selon la revendication 1 ou 2, caractérisée en ce que les moyens électriques de commande comprennent un interrupteur électrique (21) et un appareil électronique de commande pouvant être actionné à la main (22) avec un relais de temporisation, au moyen desquels on peut enclencher les distributeurs mentionnés précédemment (13, 14, 16).

4. Aide au démarrage selon la revendication 3, caractérisée en ce que l'interrupteur électrique (21) est un interrupteur d'arrêt actionné à la main.

5. Aide au démarrage selon la revendication 3, caractérisée en ce que l'appareil électronique de commande (22) peut être actionné par effleurement ou automatiquement par un signal électrique de démarrage.

6. Aide au démarrage selon l'une des revendications 1 à 5, caractérisée en ce qu'il est prévu un interrupteur de surcharge (11) commandé par la pression maximale des coussins d'air pneumatiques de l'essieu moteur, au moyen duquel, quand le véhicule fonctionne à pleine charge, les distributeurs mentionnés précédemment (13, 14, 16) peuvent être ramenés à leur position de départ lors de l'interruption simultanée d'un processus de levage, position dans laquelle est interrompue la mise à l'atmosphère des coussins d'air pneumatiques (15, 17) de l'essieu auxiliaire.

7. Aide au démarrage selon la revendication 6, caractérisée en ce que l'interrupteur de surcharge (11) ramène, via un appareil électronique de commande (22) avec relais de temporisation, en arrière les distributeurs mentionnés précédemment (13, 14, 16).
